# EUROPEAN PATENT APPLICATION

(11) **EP 2 063 108 A2**
(43) Date of publication of application: **27.05.2009**
(21) Application number: 08165452.7
(22) Date of filing: 30.09.2008
(51) Int. Cl.: F03D 7/00, F03D 9/00

(54) **System and method for optimizing wake interaction between wind turbines**

(30) Priority: 16.10.2007 US 872762
(71) Applicant: General Electric Company, Schenectady, NY 12345 (US)
(72) Inventor: Vyas, Parag, 80797, Munich (DE); Aalburg, Christian, 80802, Munich (DE); Anbarasu, Arungalai, 560037, Bangalore (IN); Gujjar, Vineel Chandrakanth, 560017, Bangalore (IN); Cardinal, Mark Edward, Altamont, NY 12009 (US)
(74) Representative: Bedford, Grant Richard

(57) **Abstract**

A system and method to increase the overall power output of a windpark (10) during conditions when the wake created by an upstream turbine (12) effects the power production of a downstream turbine (14). Minimizing the wake effects created by an upstream turbine (12) on a downstream turbine (14) increases the net power produced by both the upstream and downstream turbines (12, 14). Also disclosed is an implementation of an algorithm to determine the controller (32) settings of one or more upstream turbines (12) to increase total energy capture of the turbines in the windpark (10). The algorithm also reduces the fatigue loads on the downstream turbines (14) by reducing the turbulence created by the wake effects of the upstream turbine (12).

## Description

The invention relates generally to the operation and control of a large group of wind turbines arranged as a windpark.

Wind turbines are conventionally equipped with measurement systems and control systems to enable them to independently react to changing wind conditions. These systems are designed to maximize energy capture while minimizing the impact of fatigue and extreme loads. The effectiveness of these control systems is constrained by limitations on sensor technologies. In this regard, measurement systems and detectors local to the particular wind turbine necessarily operate in a reaction mode, reacting to conditions already existing at the wind turbine. Communicating data in the form of wind conditions detected upstream in the wind flow direction of the wind turbine allows the respective wind turbine to anticipate conditions and adjust rotor angular velocity, blade pitch and the like proactively rather than reactively.

Upstream turbines produce a wake that is characterized by a region of reduced velocity and increased turbulence. Any wind turbines operating downstream in wake conditions will experience higher fatigue loads and lower power capture than expected according to the ambient wind velocity conditions.

Currently, turbines operate to set blade pitch angles and rotor angular velocity to maximize local energy capture, without consideration of the total energy capture of the windpark. It would therefore be desirable to provide a system and method that minimizes the wake effects created by an upstream turbine on a downstream turbine, while maximizing total energy capture of the windpark.

As mentioned above, the velocity in the wake of a turbine is reduced with respect to the upstream wind velocity. Thus, downstream turbines produce less energy than the upstream turbine. The velocity deficit is related to the axial thrust on the upstream turbine (which can also be represented by the turbine coefficient of thrust) and other parameters such as ambient wind turbulence intensity and turbine spacing, etc. The axial thrust can be adjusted by changing controller parameters to alter the angular velocity of the turbine rotor and the pitch angle of the blades. This results in a change in both coefficient of thrust and coefficient of power. Typically in wake-free conditions, a wind turbine is run at the point of maximum coefficient of power (until the turbine reaches rated power). For optimal energy capture across several turbines in wake conditions, a combination of these coefficients which is constrained by the aerodynamics of the rotor is the optimal in terms of windpark energy production. The invention is a unit to detect the wake conditions and then command the upstream turbines to modify the control of rotor angular velocities and blade pitch angles to the optimal combination of thrust and power coefficient.

Briefly, according to one aspect of the present invention, a control system for a windpark power plant comprises at least one upstream turbine, at least one downstream turbine, and a central processing and control unit operatively coupled to the upstream and downstream turbines. The central processing and control unit processes data received from the at least one upstream turbine to determine a wake condition of the at least one downstream turbine, and if the wake condition exists, to selectively adjust and transmit control signals to the at least one upstream turbine to increase energy capture in the windpark power plant.

According to another aspect of the present invention, a method of controlling a windpark power plant that includes at least one upstream turbine, at least one downstream turbine, and a central processing and control unit operatively coupled to a local controller for each upstream and downstream turbine, said method comprising the steps of:
receiving data from the at least one upstream turbine to determine a wake condition of the at least one downstream turbine; and
selectively adjusting control signals to the at least one upstream turbine to increase energy capture in the windpark power plant.

In another aspect of the invention, a method of controlling a windpark power plant is provided which includes at least one upstream turbine, at least one downstream turbine, and a central processing and control unit operatively coupled to a local controller for each upstream and downstream turbine, said method comprising the steps of:
receiving data from the at least one upstream turbine;
determining a wake condition of the at least one downstream turbine; and
determining input settings for the at least one upstream turbine if a wake condition exists to increase energy capture in the windpark power plant.

Various features, aspects, and advantages of the present invention will become better understood when the following detailed description is read with reference to the accompanying drawings in which like characters represent like parts throughout the drawings, wherein:
FIGURE 1 is a schematic illustration of a windpark showing wake interaction;
FIGURE 2 is a schematic illustration of a part of a windpark showing wake turbulence;
FIGURE 3 is a schematic illustration of a windpark control and turbine coordination system according to an embodiment of the invention;
FIGURE 4 is a flow chart showing a wake interaction algorithm according to a method of the invention; and
FIGURE 5 is a flow chart showing a control algorithm to determine and adjust turbine settings according to a method of the invention.

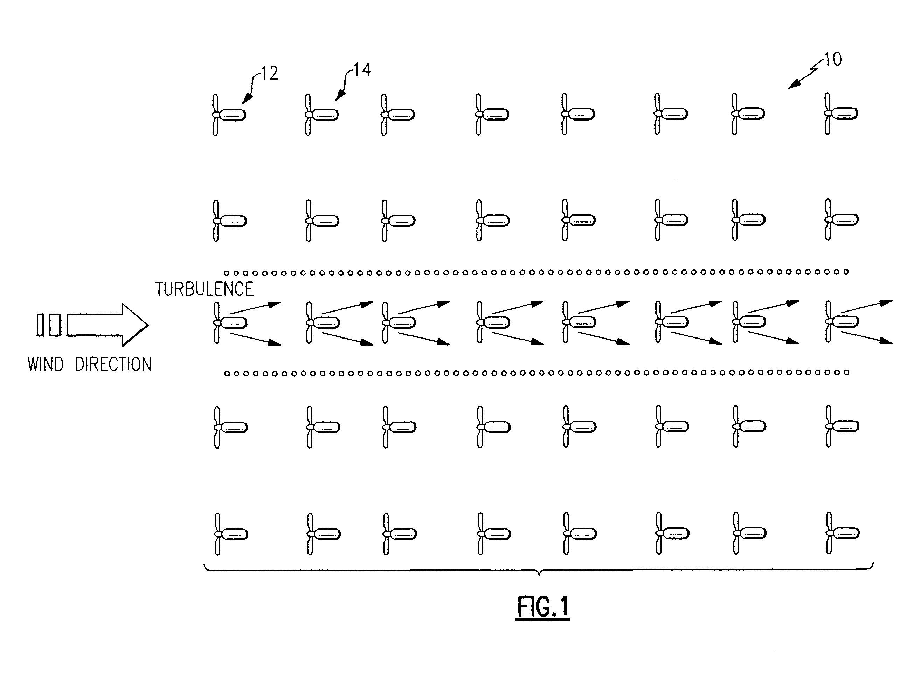

Referring to FIG. 1, a windpark 10 is schematically depicted comprising a plurality of upstream wind turbines 12, a plurality of downstream wind turbines 14, and so on.

For convenience of explanation, the windpark 10 is depicted as having evenly spaced rows of wind turbines 12, 14. However, it is to be understood that more or fewer wind turbines may be provided and that the wind turbines may be distributed in varying patterns or arrays depending upon the topography, prevailing wind direction, and the like. For example, the downstream wind turbines 14 may be offset with respect to the upstream wind turbines 12, and so on.

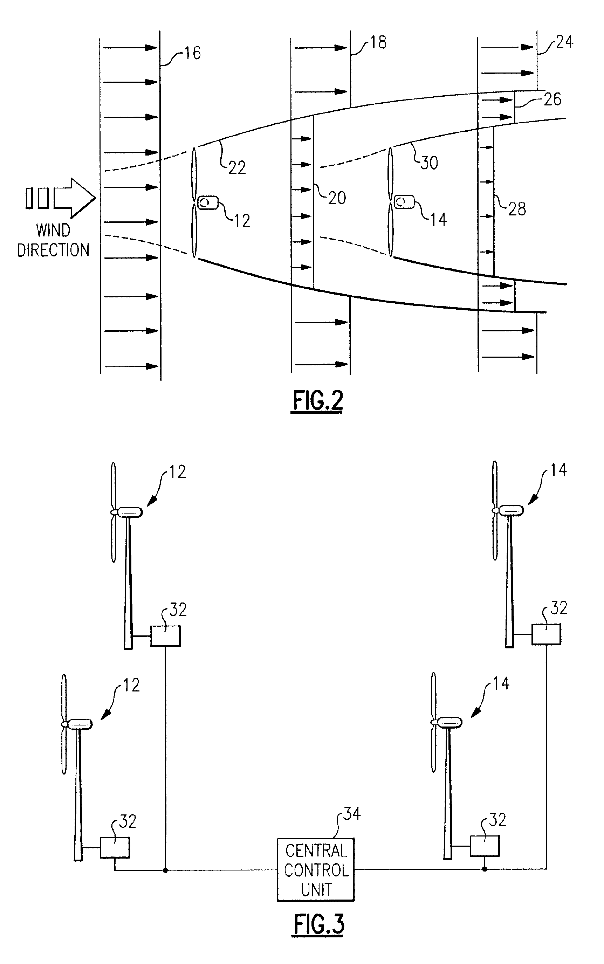

Referring to FIG. 2, the wind is depicted as having uniform speed profile 16 before passing the upstream wind turbine 12. However, it is understood that the invention is not limited by uniform speed, and that there may some variation in wind speed dependent on direction. After passing the upstream wind turbine 12, the speed of the wind that blows through the upstream wind turbine 12 decreases substantially in speed. This change in speed can be seen from the substantially uniform speed profile 16 that, after having passed the upstream wind turbine 12, changes into the wind speed profiles 18, 20. As can be seen in FIG. 2, the central portion profile 20 represents the substantially decelerated wake air that extends from the upstream wind turbine 12 within a contour 22 in the wind direction, and the outer portion profile 18 indicates the wind speed that essentially is not influenced by the upstream wind turbine 12.

The difference in speed between the portions of the wind speed profiles 18, 20 is large. As a result, a great deal of turbulence is created. This is disadvantageous because this difference produces higher fluctuating loads on the downstream wind turbine 14 and because more kinetic energy of the wind is lost as heat. The air stream in the central portion profile 20 serves as supply for the downstream wind turbine 14 in the lee, which has also been set to extract energy from the wind in the maximum manner. However, the energy that can be extracted from the wind is much less because the wind speed in the central portion profile 20 is so much lower than the original uniform speed profile 16. Behind the downstream wind turbine 14, additional wind speed profiles 24, 26, 28 are produced in which the outer portion profile 24 show the least loss of speed, the intermediate portion profile 26 some loss of speed, and the central portion profile 28 represents the substantially decelerated wake air, which extends from the downstream wind turbine 14 within a contour 30 in the wind direction.

As schematically shown in FIG. 3, each of the wind turbines 12, 14 have a respective controller 32 that receives signals regarding wind direction, velocity, load, and the like, and controls the respective turbine. More particularly, the turbine controllers are conventionally provided to receive and act upon local sensor information for the respective turbines. Each wind turbine has associated with it input values which are locally detected by measurement sensors such as the rotor and generator speeds, the electrical power, the generator torque, the blade or pitch angle and the pitch rate, the wind velocity, and the wind direction. On the basis of these regularly measured values, the individual turbines 12, 14 are controlled according to an algorithm implemented in the local controller 32 (standard control).

According to conventional practice, additional measurement values, e.g., temperatures, hydraulic pressures, tower head accelerations, oil level, and wear indications, may also be detected and allow for determination of certain conditions of the plant and may result in turbine shutdown or other control modifications. The sensors on the turbine can be provided, for example, as acceleration sensors on the tower head and the rotor blade, wire strain gauges on representative points of the support structure, e.g., on the blade root, rotor shaft, and/or base of the tower. Additionally, or alternatively, piezoelectric devices or optical fibers may be used to sense current conditions and stresses on the turbine structure.

According to an example embodiment of the invention, by including additional wind field data, which ideally characterizes the undisturbed on-flow before the rotor but in the presently described embodiment is information from upstream wind turbines, control behavior can be considerably improved. For this purpose use can be made of laser-optical and/or acoustic (ultrasonic) measuring methods which are suited both for measurements on an individual points in the wind field and for measurements of complete wind profiles or wind fields in the rotor plane or far before the rotor plane.

Further improvement of the control behavior can be accomplished by linking the control system of the different turbines 12, 14 of the windpark 10 to each other. Thus, according to an example embodiment of the invention, the data collected by respective turbines is further transmitted to an operatively connected central processing and control unit 34 that receives estimated or measured signals from each turbine 12, 14 in the windpark 10 or a subset of wind turbines in the control set. Although in the illustrated embodiment the respective controllers 32 for the individual turbines 12, 14 are disposed at the respective turbine, the controllers 32 for the individual turbine may be incorporated in the central control unit 34. The central processing and control unit 34, based on the signals received and stored data, makes calculations on the impact of power production and loads on each turbine 12, 14 and control signals are then sent to each respective turbine 12, 14 to actuate the control mechanism local to each turbine, as discussed further below.

Thus, particularly using data of neighboring wind power plants (turbines) located upstream relative to the wind direction, the loading of the turbines in the windpark 10 during wind velocities above the nominal wind conditions is reduced. Notably, turbines located behind other turbines in the wind direction can react exactly and with a suitable delay on wind occurrences that have been registered in the turbine arranged upstream.

Accordingly, turbines experiencing changes in wind conditions can provide advance information to other turbines which will be affected by those same conditions as the wind field evolves. This is accomplished by providing the central processing and control unit 16 for receiving measurements from each turbine 12, 14, making calculations and sending controller information to the affected turbines. Wind conditions can be estimated by respective upstream turbines using combinations of signals from anemometers, yaw angle, blade load asymmetries, rotor speed, blade angle and the like and other loads and sensors such as laser-optical (LIDAR) and/or acoustic (ultrasonic) (SODAR). The measurements thus provide information on wind speed, direction sheer, turbulence, gusts and in particular the presence of extreme gusts. The calculation module makes the use of some of these measurements and is able to determine using preprogrammed algorithms and stored data, the movement of wind flows around the windpark. For example, this can be predicted with knowledge of wind field dynamics, the impact of terrain topography, and wake interactions. The control signal is sent to change the control mode or to set reference commands such as power level, torque demand, speed and the like.

In order that the available potential of the plant will not be reduced in a case of a possible failure of another turbine in the wind field, the operating control system is preferably configured such that the standard controllers are separated from other components of the central processing and control unit so that in the event control input from other wind power plants (wind turbines) is not available, the individual turbine will nevertheless remain operational based upon its standard control.

In an example embodiment of the invention, the central processing and control unit 34 not only sends a control signal to downstream turbine(s) 14, but in addition or in the alternative sends a control signal to the upstream turbine(s) 12, so that operation of the upstream turbine is adjusted to minimize the impact downstream. Thus, in an example embodiment, instead of the upstream turbine 12 just sending information for use in controlling the downstream turbine 14, the upstream turbine 12 is directed to alter its own behavior, for example, to reduce the energy capture of its own turbine, to reduce the load downstream. Thus, according to an example embodiment of the invention, the upstream turbine 12 actually reduces its own power, not to reduce its loads, which may or may not happen, but to reduce the downstream loads.

A wake optimization algorithm suited for the above purpose is based on the statistical evaluation of one, a plurality, or all of the measured values (e.g., rotor speed, generator performance, pitch angle, pitch rate, wind velocity and wind direction) mentioned among those operating data which are in any event continuously detected in many present day wind power plants, e.g., variable-speed pitch plants. On the basis of measurement and stored data relative to local and meteorological conditions and current stresses on the components in a table of settings, adjustments to the operating conditions of individual turbines can be determined.

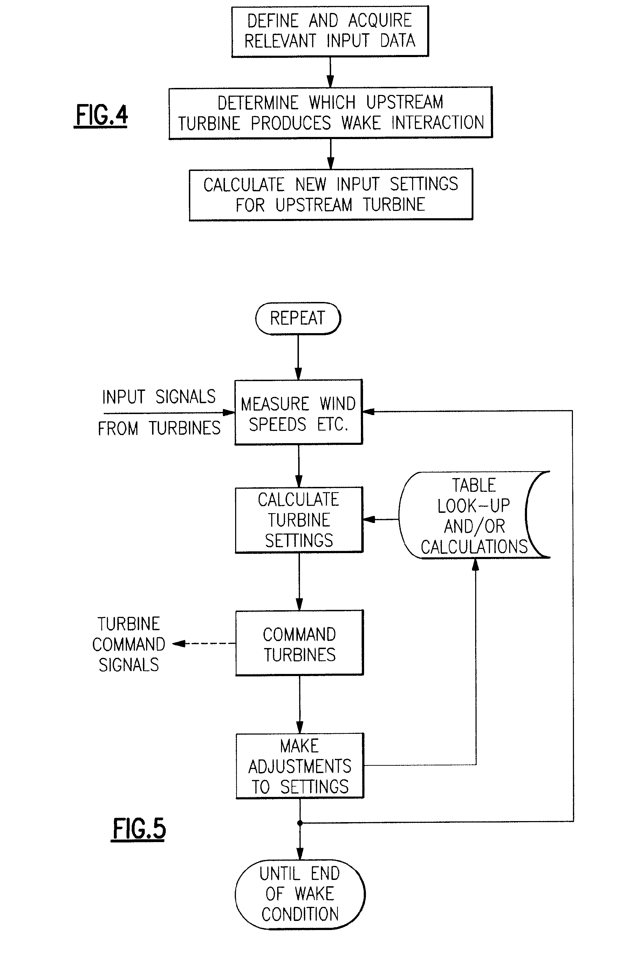

Accordingly, in an example embodiment of the invention, the wake optimization algorithm comprises of three components that can be executed either in the centralized control unit 34 or distributed amongst the turbine controllers 32, as shown in FIG. 4. The first component is an algorithm to define and acquire input data for the windpark 10. The inputs can include the wind direction from individual turbines and/or met masts and data on the coordinates of the turbines. The operating status of turbines (i.e. running or not running, etc.) can also be used to further increase the effectiveness of the power optimization. Other inputs can also use local wind turbine measurements of wind speed and turbulence intensity or other signals compared against a reference turbine, met mast data or a pre-stored data set, to determine wake operation because wakes are characterized by lower wind speeds and higher turbulence, as shown in FIG. 2.

The second component of the algorithm determines which upstream turbine 12 causes a wake that impacts a downstream turbine 14 so that the upstream turbine 12 can be adjusted for increasing windpark energy capture. Any upstream turbine 12 that does not cause a wake that impacts a downstream turbine 14 will not be adjusted and will remain running in a normal controller mode that optimizes local energy capture. In addition, turbines will not be adjusted if the wind speed is too high or too low to make any difference in the windpark energy capture, possibly due to wind speeds well above rated or very low wind speeds where too little capture energy can be gained. The general algorithm uses data from nearby turbines to determine if a downstream turbine(s) power production or turbulence may be optimized by reducing the upstream wake from nearby turbines. The algorithm requires data on the layout of the windpark or sends a mode switch or flag to the relevant controllers to switch operation from local optimal energy capture to windpark level (wake conditions). The sequence of turbines to be switched is also determined by the algorithm. In addition to the mode switch or flag, other signals can be transmitted such as level of wake effect compensation required or wind speed operating limits, and the like.

The third component of the wake optimization algorithm adjusts the controller 32 for each of the upstream turbines 12 identified in the second component, thereby changing the energy capture and thrust loading on the turbines to increase overall windpark energy capture. An embodiment of the controller algorithm is shown in FIG. 5. Appropriate inputs may include wind turbine operating parameters including estimates of axial loading, windpark layout and turbine spacing, wind speed and turbulence intensity information from any turbines in the windpark or met masts. Techniques that may be used include gradient search methods to find the controller parameters to optimize the energy capture. Methods based on adjusting controller in a predefined trajectory so that the ratio of power between upstream and downstream turbine reaches a predefined value. Table-look-up techniques may also be used based on inputs such as ambient wind conditions and turbine operating parameters. The table may be updated in an iterative fashion after adjustment and collection of data.

The algorithm is not limited to reducing axial thrust, but considers the optimal combination of thrust coefficient and power coefficient for energy capture across both turbines. The algorithm may command the upstream turbine either by signals representing reference coefficients of thrust, power, and the like, or tip-speed ratio or rotor angular velocity, blade pitch angle, and the like, or values related to the controller itself, such as controller gains, and the like. Other aspects of wind turbine operation may be included in the processing of signals or in the command output of the controller such as yaw angle of the turbine. This can be of benefit when downstream turbines are partially in the wake of upstream turbines. The controller algorithm is repeated separately and in parallel for each of the upstream turbines identified in the second component of the wake optimization algorithm.

As described above, the wake optimization algorithm of the invention achieves an increase in energy capture from the windpark while also reducing fatigue loads. The energy capture achieved is the maximum possible because the algorithm searches for the combinations of upstream turbine settings producing the maximum energy capture. The settings are adapted to changes in free-stream wind speed, air density, turbulence intensity, and the like, despite variation, and the system is applicable to not only to relative simple flat layouts, but to both complex terrain, terrains with high surface roughness.

This written description uses examples to disclose the invention, including the preferred mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A control system for a windpark power plant (10), comprising:
at least one upstream turbine (12);
at least one downstream turbine (14); and
a central processing and control unit (34) operatively coupled to said upstream and downstream turbines (12, 14), said central processing and control unit (34) processing data received from the at least one upstream turbine (12) to determine a wake condition of the at least one downstream turbine (14), and if the wake condition exists, to selectively adjust and transmit control signals to the at least one upstream turbine to increase energy capture in the windpark power plant.

2. A control system as in claim 1, wherein each wind turbine (12, 14) includes a local controller (32) for receiving data from the respective turbine.

3. A control system as in claim 2, wherein each said local controller (32) is operatively coupled to said central processing and control unit (34) for transmitting data to and receiving said data and/or control signals therefrom.

4. A method of controlling a windpark power plant that includes at least one upstream turbine (12), at least one downstream turbine (14), and a central processing and control unit (34) operatively coupled to a local controller (32) for each upstream and downstream turbine, said method comprising the steps of:
receiving data from the at least one upstream turbine (12) to determine a wake condition of the at least one downstream turbine (14); and
selectively adjusting control signals to the at least one upstream turbine (12) to increase energy capture in the windpark power plant (10).

5. A method as in claim 4, wherein the central processing and control unit (34) selectively adjusts the control signals sent to the at least one upstream turbine (12).

6. A method as in claim 4 or claim 5, wherein the local controller (32) for the at least one upstream turbine (12) selectively adjusts the control signals sent to the at least one upstream turbine (12).

7. A method of controlling a windpark power plant (10) that includes a at least one upstream turbine (12), at least one downstream turbine (14), and a central processing and control unit (34) operatively coupled to a local controller (32) for each upstream and downstream turbine, said method comprising the steps of:
receiving data from the at least one upstream turbine (12);
determining a wake condition of the at least one downstream turbine (14); and
determining input settings for the at least one upstream turbine (12) if a wake condition exists to increase energy capture in the windpark power plant (10).

8. A method as in claim 7, wherein the input settings are determined by using a table look-up technique or by using calculations.

9. A method as in claim 7 or claim 8, wherein the input settings are determined by using calculations.
